# EUROPEAN PATENT APPLICATION

(11) **EP 4 804 110 A1**
(43) Date of publication of application: **09.09.2026**
(21) Application number: 25837605.2
(22) Date of filing: 03.07.2025
(51) Int. Cl.: G06Q 50/06, H02J 3/00, H02J 3/32, H02J 3/38

(54) **ELECTRONIC DEVICE FOR SUPPORTING POWER TRANSACTION AND METHOD THEREOF**

(30) Priority: 09.07.2024 KR 20240090330
(71) Applicant: LG Energy Solution, Ltd., Seoul 07335 (KR)
(72) Inventor: HWANG, Yunson, Daejeon 34122 (KR)
(74) Representative: BCKIP Part mbB
(86) International application number: PCT/KR2025/009503
(87) International publication number: WO 2026/014805

(57) **Abstract**

Disclosed is an electronic device for supporting power transaction, the electronic device comprising: a transceiver; a processor; and a memory for storing one or more instructions, wherein the one or more instructions are configured to, when executed, cause the processor to: identify a plurality of power prediction data during a first period corresponding to a plurality of energy storage systems (ESSs), respectively; on the basis of first power prediction data during the first period corresponding to a first ESS among the plurality of ESSs, identify at least one second ESS matching the first ESS; identify power transaction intention information from each of a first terminal associated with the first ESS and a second terminal associated with the second ESS; and determine whether to perform power exchange between the first ESS and the second ESS, on the basis of the power transaction intention information identified from the first terminal and the second terminal.

## Description

### Technical Field

This application claims the benefit of Korean Patent Application No. 10-2024-0090330, filed on July 9, 2024, in the Korean Intellectual Property Office, the disclosure of which is incorporated herein by reference in its entirety.

The present disclosure relates to an electronic device for supporting an electric power trading and a method thereof.

### Background Art

As the supply of a self-electric power generating facility and an energy storage system (ESS) increases, a method of efficiently managing and utilizing electric power produced at households is becoming important. In particular, it is being normalized that a surplus electric power, which remains from electric power having been produced in a self-electric power generating facility and used, is stored to be used when necessary. Nevertheless, it may lead to waste of resources if a surplus electric power only continues to be accumulated and is not utilized. Therefore, a platform for supporting an electric power trading between ESSs for efficiently trading a surplus electric power, supplying the same where the same is required, and increasing utilization of electric power resources is required.

### Detailed Description of the Invention

### Technical Goals

Provided in the disclosed example embodiments are an electronic device for supporting an electric power trading and a method thereof. More specifically, the objective of the present invention is to construct a platform system which enables an electric power trading between individuals having ESSs in a more effective and efficient manner by accumulating data of an electric power generation amount and consumption amount according to climate circumstances in the past, and estimating, based on the data thereof, a future electric power surplus amount or electric power shortage amount in advance.

Technical goals to be achieved by the example embodiments are not limited thereto, and other technical goals may be inferred from example embodiments below.

### Technical solutions

Provided in an aspect of the present disclosure is an electronic device supporting an electric power trading, the electronic device including a transceiver, a processor, and a memory storing at least one instruction, wherein, when the at least one instruction is executed, the processor is configured to identify a plurality of electric power estimation data during a first period which correspond to each of a plurality of energy storage systems (ESS), identify, based on first electric power estimation data during the first period which correspond to a first ESS of a plurality of ESSs, at least one second ESS matched with the first ESS, identify electric power trading intention information from each of a first terminal associated with the first ESS and a second terminal associated with the second ESS, and determine, based on the electric power trading intention information identified from the first terminal and the second terminal, whether to perform an electric power exchange between the first ESS and the second ESS.

Provided in an example embodiment of the present disclosure is the electronic device, wherein, when the at least one instruction is executed, the processor is configured to control, in a case of having determined to perform the electric power exchange between the first ESS and the second ESS, the first ESS and the second ESS in order for an electric power exchange to occur by an electric power amount agreed upon between the first ESS and the second ESS.

Further, provided in an example embodiment of the present disclosure is the electronic device, wherein, when the at least one instruction is executed, the processor is configured to obtain the first electric power estimation data during a first period which correspond to the first ESS and are outputted from an artificial intelligence engine after weather prediction data with respect to the first period of a region corresponding to a location of the first ESS, which are identified from a weather prediction server, are inputted in the artificial intelligence engine, wherein the artificial intelligence engine is an artificial intelligence model which is constructed by learning a correlation between weather data during a second period of a region corresponding to a location of at least one portion of the plurality of ESSs and electric power data including at least one portion of a power generation amount, a charge amount, a discharge amount and a household electric power consumption amount corresponding to the second period with respect to the at least one portion of the plurality of ESSs.

Further, provided in an example embodiment of the present disclosure is the electronic device, wherein the correlation includes a first correlation related to a proportionality with respect to a sunshine amount of a sunlight generation amount which is at least one portion of the power generation amount and an inverse proportionality with respect to a temperature thereof, a second correlation related to a proportionality with respect to wind speed of a wind power generation amount which is at least one portion of the power generation amount, and a third correlation with respect to a U letter-shaped relationship with respect to a temperature of the household electric power consumption amount.

Further, provided in an example embodiment of the present disclosure is the electronic device, wherein the weather prediction data include data with respect to at least one portion of a temperature, a sunshine amount and wind speed which are predicted with respect to the first period of the region.

Further, provided in an example embodiment of the present disclosure is the electronic device, wherein, when the at least one instruction is executed, the processor is configured to identify, based on the first electric power estimation data, electric power supply data for each unit time which are estimated with respect to the first period of the first ESS, wherein the electric power supply data for each unit time include data obtained by estimating whether a household electric power consumption amount corresponding the first ESS may be supplied with an electric power amount of the first ESS and a power generation amount corresponding to the first ESS for the each unit time, identify, based on the electric power supply data for each unit time, at least one ESS estimated to have an electric power supply state opposite to that of a first ESS in at least one portion of the unit time, and identify, based on condition information of the first ESS, the at least one second ESS of the at least one ESS estimated to have an electric power supply state opposite to that of the first ESS.

Further, provided in an example embodiment of the present disclosure is the electronic device, wherein, when the at least one instruction is executed, the processor is configured to identify, based on the first electric power estimation information, the electric power supply data for each unit time further including a sum of the electric power amount of the first ESS and the power generation amount corresponding to the first ESS and a value estimated by a difference by each unit time of the household electric power consumption amount.

Further, provided in an example embodiment of the present disclosure is the electronic device, wherein, when the at least one instruction is executed, the processor is configured to identify the at least one second ESS satisfying at least one of a sales price condition, a distance condition, a compatibility condition and a connection condition of which at least one is included in the condition information of the first ESS of the at least one ESS estimated to have an electric power supply state opposite to that of the first ESS in the at least one portion of the unit time.

Further, provided in an example embodiment of the present disclosure is the electronic device, wherein, when the at least one instruction is executed, the processor is configured to identify that a size of the sum of the electric power amount of the first ESS and the power generation amount corresponding to the first ESS and the value estimated by the difference by each unit time of the household electric power consumption amount in the at least one portion of the unit time is a threshold value or greater, and identify, with respect to the at least one portion of the unit time during which the size of the value estimated by the difference is a threshold value or greater, the at least one second ESS without applying at least one portion of a condition included in the condition information.

Further, provided in an example embodiment of the present disclosure is the electronic device, wherein, when the at least one instruction is executed, the processor is configured to identify that an electric power supply state of the first ESS corresponds to an electric power shortage in at least one portion corresponding to a peak time zone of the unit time, and identify, with respect to the at least one portion corresponding to the peak time zone of the unit time in which the electric power supply state of the first ESS corresponds to an electric power shortage, the at least one second ESS without applying at least one portion of a condition included in the condition information.

Further, provided in an example embodiment of the present disclosure is the electronic device, wherein, when the at least one instruction is executed, the processor is configured to deliver trading information related to the electric power exchange between the first ESS and the second ESS to each of the first terminal and the second terminal, and identify the electric power trading intention information including information indicating whether an electric power trading is desired and an electric power amount which is desired to be traded from each of the first terminal and the second terminal.

Provided in another aspect of the present disclosure is a method for supporting an electric power trading of an electronic device, the method including identifying a plurality of electric power estimation data during a first period which correspond to each of a plurality of ESSs, identifying at least one second ESS matched with a first ESS based on first electric power estimation data during the first period corresponding to the first ESS of a plurality of ESSs, identifying electric power trading intention information from each of a first terminal associated with the first ESS and a second terminal associated with the second ESS, and determining, based on the electric power trading intention information identified from the first terminal and the second terminal, whether to perform an electric power exchange between the first ESS and the second ESS.

Provided in another aspect of the present disclosure is a computer-readable non-transitory recording medium which records a program for executing a method for supporting an electric power trading on a computer, wherein the method for supporting the electric power trading includes identifying a plurality of electric power estimation data during a first period which correspond to each of a plurality of ESSs, identifying, based on first electric power estimation data during the first period which correspond to a first ESS of a plurality of ESSs, at least one second ESS matched with the first ESS, identifying electric power trading intention information from each of a first terminal associated with the first ESS and a second terminal associated with the second ESS, and determining, based on the electric power trading intention information identified from the first terminal and the second terminal, whether to perform an electric power exchange between the first ESS and the second ESS.

Specific details of other example embodiments are included in the detailed description and drawings.

### Effects of the Invention

According to the example embodiments, it is possible to expect one or more following effects.

According to the example embodiments, it is possible to construct a platform system which enables an electric power trading between individuals having ESSs in a more effective and efficient manner by accumulating data of an electric power generation amount and consumption amount according to climate circumstances in the past, and estimating, based on the data thereof, a future electric power surplus amount or electric power shortage amount in advance.

The effects to be obtained in the present disclosure are not limited to the aforementioned effects, and other effects not mentioned herein will be clearly understood by those skilled in the art from the description of claims.

### Brief Description of Drawings

FIG. 1 is a drawing illustrating a linked relation between an electronic device supporting an electric power trading and each component supporting the electronic device according to an example embodiment.
FIG. 2 is a flowchart describing a method for supporting an electric power trading according to an example embodiment.
FIG. 3 is a drawing illustrating an example of electric power data and weather data collected by a data collecting server according to an example embodiment.
FIG. 4 is a drawing illustrating an artificial intelligence engine according to an example embodiment.
FIG. 5 is an example drawing illustrating first electric power estimation data of a first ESS and second electric power estimation data of an ESS of which an electric power supply state is estimated to be opposite to the same according to an example embodiment.
FIG. 6 illustrates a block diagram of an electronic device according to an example embodiment.

### Mode for Carrying Out the Invention

Terms used in example embodiments are selected from currently widely used general terms when possible while considering the functions in the present disclosure. However, the terms may vary depending on the intention of a person skilled in the art, precedents, the emergence of new technology, and the like. Further, in particular cases, there are also terms arbitrarily selected by the applicant, and in these cases, the meaning will be described in detail in the corresponding descriptions. Therefore, the terms used in the present disclosure are not to be construed simply as its designation but based on the meaning of the term and the overall context of the present disclosure.

Throughout the specification, when a part is described as "comprising or including" a component, it does not exclude another component but may further include another component unless otherwise stated.

The expression "at least one of a, b, or c" described throughout the specification may include "a alone," "b alone," "c alone," "a and b," "a and c," "b and c," or "all of a, b, and c."

The "terminal" referred hereinafter may be embodied as a computer or a portable terminal that may access a server or another terminal through a network. Here, the computer may include, for example, a notebook, a desktop computer, and/or a laptop computer which are equipped with a web browser. The portable terminal may be a wireless communication apparatus ensuring portability and mobility and include (but is not limited to) any type of a handheld wireless communication apparatus, for example, a tablet PC, a smartphone, a communication-based terminal such as international mobile telecommunication (IMT), code division multiple access (CDMA), W-code division multiple access (W-CDMA), long term evolution (LTE), or the like.

Hereinafter, example embodiments of the present disclosure will be described in detail with reference to the accompanying drawings in order for those of ordinary skill in the art to which the present disclosure pertains to easily implement example embodiments of the present disclosure. However, the present disclosure may be implemented in multiple different forms and is not limited to the example embodiments described herein.

Hereinafter, example embodiments of the present disclosure will be described in detail with reference to the drawings.

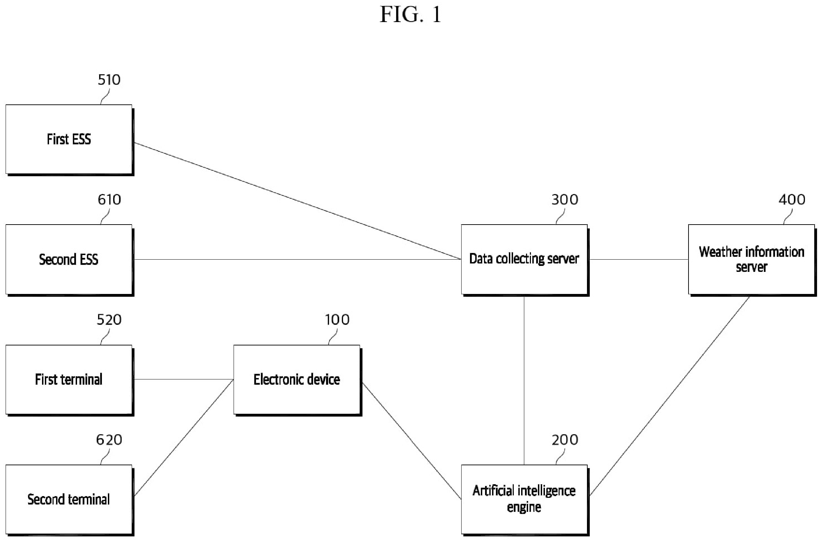

FIG. 1 is a drawing illustrating a linked relation between an electronic device supporting an electric power trading and each component supporting the electronic device according to an example embodiment.

Referring to FIG. 1, an electronic device 100 may be operated by being linked with an artificial intelligence engine 200, a data collecting server 300 and a weather information server 400. Further, although the electronic device 100 may be operated by being linked with a plurality of energy storage systems (ESS) and a terminal corresponding to each ESS, in FIG. 1, for the sake of convenience in description, only a first ESS 510, a first terminal 520 corresponding to the first ESS 510, a second ESS 610 and a second terminal 620 corresponding to the second ESS 610 are illustrated. FIG. 1 illustrates only components directly related to the present disclosure, and thus, it will be understood by those skilled in the art related to the example embodiment that other general-purpose components may be further included in addition to the components illustrated in FIG. 1.

Although described in detail hereinafter, to describe an operation of each component in short, the artificial intelligence engine 200 may perform an operation of being inputted with weather prediction data to output electric power estimation data. The data collecting server 300 may obtain electric power data from a plurality of ESSs to support learning of the artificial intelligence engine 200, and obtain weather data from the weather information server 400 to store the same. The weather information server 400 may be a server which may identify weather data and weather prediction data by using a self-weather prediction model or being connected to an external weather prediction organization server. The electronic device 100, the artificial intelligence engine 200, the data collecting server 300 and the weather information server 400 which are described above may be operated as servers which are individually and physically divided, and at least one portion thereof may be operated as servers which are logically divided in a physically identical server. For instance, the artificial intelligence engine 200 may be implemented as an artificial intelligence model constructed at the data collecting server 300, and may be implemented as an artificial intelligence model implemented as a device separate from the data collecting server 300 or another server.

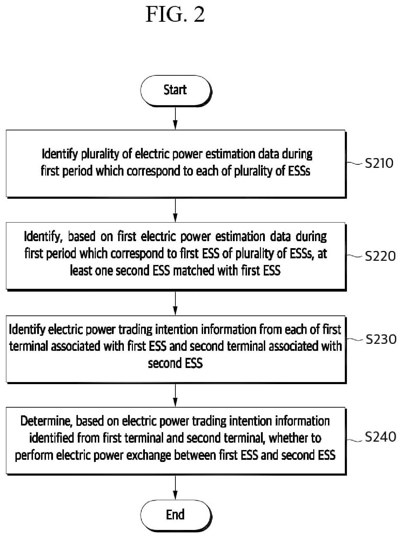

FIG. 2 is a flowchart describing a method for supporting an electric power trading according to an example embodiment.

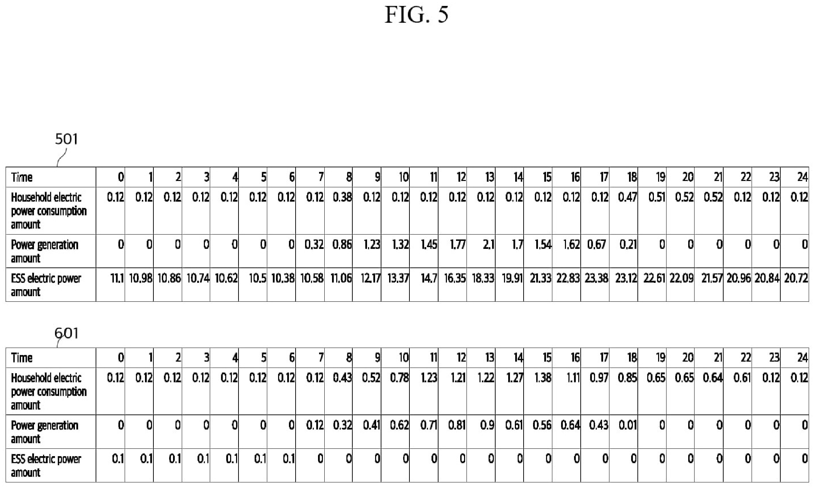

Referring to FIG. 2, in operation S210, the electronic device 100 may identify a plurality of electric power estimation data during a first period which correspond to each of a plurality of ESSs. Here, an owner of each ESS may be in a state of having been registered to an electric power trading platform, and, accordingly, each of the plurality of ESSs may be in a state of being connected to the electronic device 100 through a network. Although described in detail hereinafter, the first period may be a period in the future from a corresponding point in time, and the electric power estimation data may correspond to a power generation amount of a power generator corresponding to each ESS, a charge amount of each ESS, a discharge amount of each ESS, and a household electric power consumption amount of a household to which each ESS is connected, which are expected to be measured in the first period with respect to each ESS. An example of each value thereof may be identified also in FIG. 5 hereinafter.

In operation S220, the electronic device 100 may, based on first electric power estimation data during the first period corresponding to the first ESS 510 among the plurality of ESSs, identify at least one second ESS 610 matched with the first ESS 510. Here, the first ESS 510 is an example among the plurality of ESSs, and, although described in detail hereinafter, the second ESS 610 may be at least one of the ESSs having an electric power supply state opposite to that of the first ESS 510 in a unit time during the first period.

In operation S230, the electronic device 100 may identify electric power trading intention information from each of the first terminal 520 associated with the first ESS 510 and the second terminal 620 associated with the second ESS 610. Here, the electric power trading intention information may be information respectively inputted into the first terminal 520 and the second terminal 620 by each owner of the first ESS 510 and the second ESS 610, and may be information including a content that each owner thereof agrees upon an electric power trading according to trading information delivered to the first terminal 520 and the second terminal 620 to be described hereinafter.

In operation S240, the electronic device 100 may determine, based on the electric power trading intention information identified from the first terminal 520 and the second terminal 620, whether to perform an electric power exchange between the first ESS 510 and the second ESS 610. Hereinafter, each operation and each configuration associated with each operation will be described.

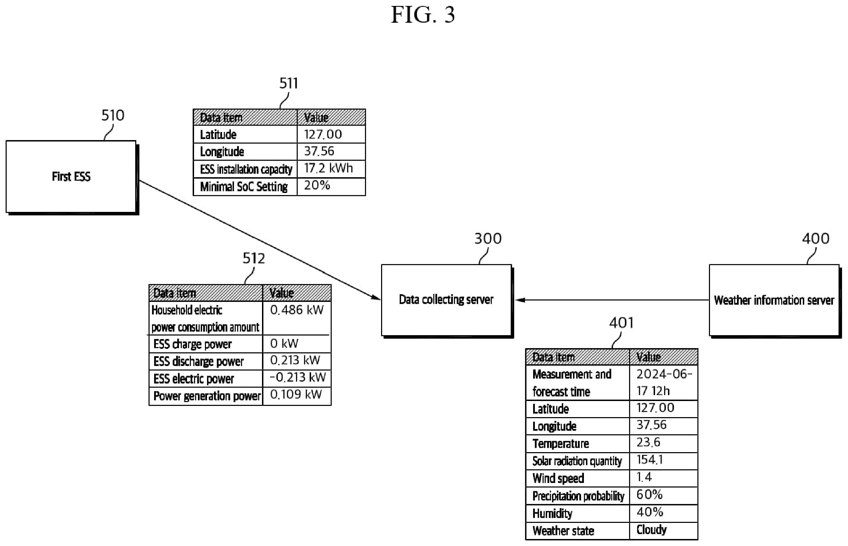

Firstly, the electronic device 100 may be operated by being linked with the artificial intelligence engine 200 to identify the plurality of electric power estimation data during the first period which correspond to each of the plurality of ESSs. The artificial intelligence engine 200 may be in a state of having learned by using electric power data and weather data from the data collecting server 300 as described above. Firstly, the electric power data and the weather data obtained by the data collecting server 300 will be described with reference to FIG. 3.

FIG. 3 is a drawing illustrating an example of electric power data and weather data collected by a data collecting server according to an example embodiment.

Referring to FIG. 3, basic data 511 and electric power data 512 may be collected from the first ESS 510 which is one of a plurality of ESSs. The first ESS 510 is an example, and the data collecting server 300 may similarly obtain basic data and electric power data from the plurality of other ESSs.

Firstly, as basic data, the data collecting server 300 may obtain latitude, longitude, ESS installation capacity and minimal state-of-charge (SoC) setting information of the first ESS 510. Latitude and longitude information of the first ESS 510 is obtained as location information of the first ESS, and basic data may be obtained also in another method, for instance, in a form of an address and the like. Next, an ESS installation capacity may include information with respect to a capacity of the first ESS 510. Minimal SoC setting information is a minimal SoC value which is set with respect to the first ESS 510, and may signify a setting value at which discharge may not be performed and only charge may be performed when an SoC value of the first ESS 510 decreases to or below a corresponding SoC value. According to an example of FIG. 3, the data collecting server 300 may obtain basic data of 127 degrees of latitude, 37.56 degrees of longitude, 17.2 kilowatt-hours (kWh) of an ESS installation capacity, and 20 percent (%) of a minimal SoC setting with respect to the first ESS 510. Such basic data may be collected by the data collecting server 300 at a point in time at which the plurality of ESSs are initially installed or an arbitrary point in time afterwards.

Next, as electric power data, the data collecting server 300 may obtain, from the first ESS 510, information with respect to a household electric power consumption amount, an ESS charge power, an ESS discharge power, an ESS electric power and a power generation power. Such electric power data may be delivered to the data collecting server 300 from the plurality of ESSs for each unit time which is set. For instance, the electric power data may be delivered to the data collecting server 300 for a one-minute or several-minute interval from the plurality of ESSs. The household electric power consumption amount in the electric power data may signify electric power consumed at a household connected to the first ESS 510 during a unit time corresponding to a corresponding point in time. The ESS charge power may signify an amount by which an ESS is charged with electric power generated by a power generator connected to the first ESS 510 at a corresponding point in time, and the ESS discharge power may signify an amount of electric power which is being discharged from the first ESS 510 at a corresponding point in time. The ESS electric power may be a value subtracting the ESS discharge power from the ESS charge power. A power generation amount may signify an amount generated by a power generator connected to the first ESS 510 at a corresponding point in time, and may include, for instance, a sunlight generation amount and a wind power generation amount, without being limited thereto. According to an example of FIG. 3, the data collecting server 300 may identify a household electric power consumption amount indicating that 0.486 kilowatts (kW) are consumed at a household during a unit time corresponding to a corresponding point in time from the first ESS 510, an ESS charge power indicating that the first ESS 510 is not charged at all during the unit time, an ESS discharge power indicating that the first ESS 510 is discharged by 0.213 kW during the unit time, an ESS electric power indicating -0.213 kW, and a power generation power indicating that a power generator corresponding to the first ESS 510 has generated electric power by 0.109 kW. Here, the amount discharged from the first ESS 510 being added to the power generation power is smaller than the household electric power consumption amount, which may indicate that a household corresponding to the first ESS 510 has used electric power by receiving the same distributed from an external system at a corresponding point in time.

Referring to FIG. 3 again, the data collecting server 300 may obtain weather data from the weather information server 400. According to an example embodiment, the weather data may be delivered to the data collecting server 300 at an interval of a one-hour or several-hour unit. The weather data may include information with respect to reference time, latitude, longitude, temperature, solar radiation quantity, wind speed, precipitation probability, humidity and weather classification information. Firstly, the reference time, latitude and longitude information included in the weather data may indicate whether the corresponding weather data are a value obtained by measuring a weather at which time and which place. The latitude and longitude may be replaced with another form used for indicating a location such as an administrative district. The weather classification information may be information indicating in what state a weather state of the corresponding time and the corresponding place is in a broad framework, for instance, to which state it belongs among states such as rainy, cloudy, sunny, or misty. According to an example of FIG. 3, the data collecting server 300 may identify weather data indicating 23.6 Celsius degrees of temperature, 154.1 watts (W) of solar radiation quantity for each square meter, 1.4 meters per second (m/s) of wind speed, 60% of precipitation probability, 40% of humidity, and a cloudy weather state with respect to a region around a location of 127 degrees of latitude and 37.56 degrees of longitude at 12 o'clock on June 17, 2024.

After the electric power data and the weather data are obtained as in FIG. 3, the data collecting server 300 may map the same. In other words, the data collecting server 300 may identify the weather data of a location at which the plurality of ESSs are installed based on the basic data, and may map the electric power data obtained from the plurality of ESSs and the weather data of the corresponding location. Here, a time at which the electric power data are obtained and reference time information included in the weather data may be matched to be mapped. For instance, the electric power data of the first ESS 510 from 15:00 to 16:00 on June 26, 2024 and the weather data of a region at which the first ESS 510 is installed from 15:00 to 16:00 on June 26, 2024 may be mapped. Here, in a case in which an obtaining interval of the electric power data and the weather data is identical, each datum may be mapped as it is. Unlike this, in a case in which an obtaining interval is different from each other, such as in a case in which the electric power data are obtained at a one-minute or several-minute interval and the weather data are obtained at a one-hour or several-hour interval as described above, the electric power data may be accumulated to correspond to the obtaining interval of the weather data to be mapped. For instance, the electric power data of the first ESS 510, which are obtained every three minutes from 15:00 to 16:00 on June 26, 2024, may be accumulated with respect to the corresponding one hour, before being mapped with the weather data with respect to the region at which the first ESS 510 is installed at 15:00 on June 26, 2024, which are obtained every one hour. Here, in a case in which the electric power data are in a kWh unit, in other words, a time unit as in FIG. 3, an average value may be used in order to accumulate the electric power data, obtained by a minute unit, by an hour unit. Of course, a method of accumulating the electric power data in another manner is also possible.

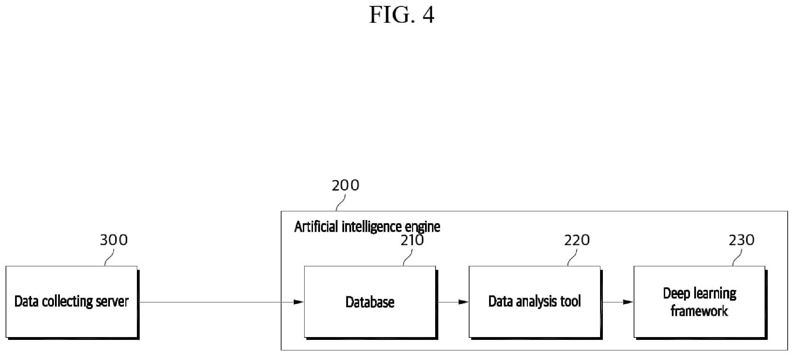

The data collecting server 300, which has collected data as such, may deliver the same to the artificial intelligence engine 200 in order to support the artificial intelligence engine 200 to learn. Hereinafter, the artificial intelligence engine 200 will be described with reference to FIG. 4.

FIG. 4 is a drawing illustrating an artificial intelligence engine according to an example embodiment.

Referring to FIG. 4, the artificial intelligence engine 200 may store electric power data and weather data obtained from the data collecting server 300 in a database 210 thereof. According to an example embodiment, the database 210 may be implemented in a time series DB method, a NoSQL method or the like, without being limited thereto. Afterwards, the artificial intelligence engine 200 may pre-process the electric power data and the weather data which are stored in the database 210. For instance, by performing a pre-processing operation of excluding data which appear as a measurement error or data having an extreme value or a pre-processing operation for processing a missing value and the like, the electric power data and the weather data may be processed as learning data. Next, the artificial intelligence engine 200 may extract a pattern of the weather data and the electric power data by using a data analysis tool 220. For instance, the artificial intelligence engine 200 may extract a basic statistical feature such as an average, a standard deviation, a maximal value or a minimal value for each item of the weather data and the electric power data, and accumulate data for each time to analyze seasonality and trend. Of course, a pattern extraction process is not limited to a process described above. Next, the artificial intelligence engine 200 may cause a recurrent neural network (RNN) included in the same to learn by using a deep-learning framework 230. For instance, the artificial intelligence engine 200 may cause the RNN to learn by inputting, by using the deep-learning framework 230, a pattern of the weather data into the RNN as the learning data and back-propagating a loss calculated by comparing a correct answer value identified based on a pattern of the electric power data to a value outputted from the RNN. For instance, back-propagation with respect to the RNN may be performed as back-propagation through time.

According to an example embodiment, the artificial intelligence engine 200 may learn as described above by receiving data corresponding to a second period in the past from weather data and electric power data stored in the data collecting server 300. Here, the second period may be adequately set in consideration of efficiency of learning. The artificial intelligence engine 200 may learn a correlation between weather data during the second period at a region corresponding to a location of at least one portion of a plurality of ESSs and electric power data including at least one portion of a power generation amount, a charge amount, a discharge amount, and a household electric power consumption amount corresponding to the second period with respect to the at least one portion of the plurality of ESSs through a learning process. For instance, the correlation may include a first correlation related to a proportionality with respect to a sunshine amount of a sunlight generation amount which is at least one portion of the power generation amount and an inverse proportionality with respect to a temperature thereof, a second correlation related to a proportionality with respect to wind speed of a wind power generation amount, and a third correlation related to a U letter-shaped relationship with respect to a temperature of the household electric power consumption amount. Here, a U letter-shaped relation may signify a relation by which, when a temperature section is divided into a section with a high temperature, a section with an intermediate temperature, and a section with a low temperature, the household electric power consumption amount increases at the section with the high temperature and the section with the low temperature. The artificial intelligence engine 200 may learn such relation to perform a function of being inputted with weather prediction data and outputting electric power estimation data, which is to be described hereinafter.

According to an example embodiment, the artificial intelligence engine 200 may learn in order to output electric power estimation data reflecting a previous household electric power use amount pattern for each of the plurality of ESSs. As for the household electric power use amount pattern, for instance, in a case in which an A household has household members often staying at home even at day and a B household has household members not staying at home at day, the A household may have a great electric power use amount due to a great use amount of an air conditioner at day during hot summertime, while the B household may have a small electric power use amount even at day during hot summertime. In order for the artificial intelligence engine 200 to output electric power estimation data reflecting such household electric power use amount pattern, according to an example embodiment, the artificial intelligence engine 200 may be implemented in a manner of learning by dividing weather data and electric power data for each of the plurality of ESSs, a manner of using the same by learning a model divided for each of the plurality of ESSs, or a manner of using identification information for each of the plurality of ESSs as an input together, but the same is not limited to the description above.

By being operated by being linked with the artificial intelligence engine 200 which has learned according to an example embodiment, the electronic device 100 may identify a plurality of electric power estimation data during a first period which correspond to each of the plurality of ESSs. Here, the first period may be a period in the future from a corresponding point in time, and the artificial intelligence engine 200 may obtain weather prediction data which are data obtained by predicting weather circumstances in the future from the corresponding point in time from the weather information server 400. For instance, the first period may be a range within 48 hours from a corresponding point in time. The weather prediction data may include information predicted with respect to the first period in relation to an item similar to the above-mentioned weather data such as temperature, solar radiation quantity, wind speed, precipitation probability, humidity, and weather classification information and the like. Further, by using latitude and longitude information included in such weather prediction data, the weather prediction data may be mapped with respect to each of the plurality of ESSs. The artificial intelligence engine 200 may calculate such weather prediction data to output the electric power estimation data. Here, because the artificial intelligence engine 200 is in a state of having learned a correlation between the weather data and the electric power data as described above, when the weather prediction data with respect to each of the plurality of ESSs are inputted, the electric power estimation data with respect to each of the plurality of ESSs may be outputted.

According to an example embodiment, the electric power estimation data may include information estimated with respect to a second period in relation to an item similar to the electric power data, such as a power generation amount, a charge amount, a discharge amount, a household electric power consumption amount and the like. For instance, the electric power estimation data may include information estimated with respect to a power generation amount, a charge amount, a discharge amount, and a household electric power consumption amount for each unit time of a second period. For instance, in a case in which the second period corresponds to 00:00 to 24:00 on August 3, 2024, and the unit time corresponds to one hour, electric power estimation data with respect to the first ESS 510 may include information estimated with respect to a power generation amount, a charge amount, a discharge amount, and a household electric power consumption amount for each time of a one-hour interval on August 3, 2024.

According to an example embodiment, the electronic device 100 may identify first electric power estimation data corresponding to the first ESS 510. The electronic device 100 may, based on the first electric power estimation data, identify at least one second ESS 610 matched with the first ESS 510. For this, the electronic device 100 may, based on the first electric power estimation data, identify electric power supply data for each unit time which are estimated with respect to a first period of the first ESS 510. Here, the electric power supply data for each unit time may be information as to whether a household electric power consumption amount of a household at which a plurality of ESSs are installed may be supplied based on an electric power amount stored in the first ESS 510 and a power generation amount corresponding to the first ESS 510, and may include an electric power supply value. Specifically, the electric power supply value may be a value obtained by estimating whether a household electric power consumption amount of a household at which a plurality of ESSs are installed may be supplied based on an electric power amount stored for each of the plurality of ESSs, calculated by a difference between a charge amount and a discharge amount, and a power generation amount corresponding to each of the plurality of ESSs, with respect to a corresponding unit time. For instance, an electric power supply value for each unit time with respect to the first ESS 510 may be a value corresponding to a difference between a sum of the electric power amount and the power generation amount of the first ESS 510 which are estimated for each unit time and a household electric power consumption amount corresponding to the first ESS 510. An electric power supply value being calculated as a negative number may signify that the first ESS 510 and a power generator connected thereto are estimated to be unable to supply electric power to a household for a corresponding unit time, and that, accordingly, the corresponding household is estimated to receive electric power distributed from an external system by an absolute value of an electric power supply value to use the same. On the contrary, an electric power supply value being a positive number may signify that the first ESS 510 and a power generator connected thereto are estimated to be able to supply electric power to a household for a corresponding unit time, and that, accordingly, the corresponding household is estimated to have electric power by an absolute value of the electric power supply value as a surplus. Electric power supply data for each unit time may include an electric power supply value for each unit time per se, and information as to whether electric power is supplied for each unit time which is identified by whether the electric power supply value is a positive number or a negative number. For instance, electric power supply data for a specific unit time which correspond to first electric power estimation data may include information indicating an electric power supply value and an electric power surplus corresponding to 14.8 kWh, which may indicate that the first ESS 510 is expected to have a surplus electric power by 14.8 kWh at the corresponding specific unit time. On the contrary, the electric power supply data for a specific unit time which correspond to the first electric power estimation data may include information indicating an electric power supply value and an electric power shortage corresponding to -6.5 kWh, which may indicate that the first ESS 510 is expected to have a shortage of electric power by 6.5kWh at the corresponding specific unit time.

Alternatively, according to another example embodiment, the artificial intelligence engine 200 may immediately output an electric power supply value for each unit time as electric power estimation data. In this case, the electronic device 100 may calculate a difference between a charge amount and a discharge amount as described above, and calculate a difference value between the corresponding difference value and a household electric power consumption amount, thereby identifying the corresponding value outputted from the artificial intelligence engine 200 as the electric power supply value for each unit time without performing a process of identifying the electric power supply value.

The electronic device 100 may identify at least one ESS which is estimated to have an electric power supply state opposite to that of the first ESS 510 from at least one portion of a unit time based on the electric power supply data for each unit time. For instance, in a case in which the first ESS 510 is estimated to have an electric power supply value with respect to a specific unit time as a positive number, in other words, to have a surplus of electric power, the electronic device 100 may identify at least one ESS which is estimated to be opposite thereto with respect to the corresponding unit time, which is to have an electric power supply value as a negative number, in other words, a shortage of electric power. On the contrary, in a case in which the first ESS 510 is estimated to have an electric power supply value as a negative number with respect to a specific unit time, in other words, to have a shortage of electric power, the electronic device 100 may identify at least one ESS which is estimated to have an electric power supply value as a positive number, in other words, a surplus of electric power.

Like this, an example in which at least one ESS which is estimated to have an opposite electric power supply state is identified will be described with reference to FIG. 5.

FIG. 5 is an example drawing illustrating first electric power estimation data of a first ESS and second electric power estimation data of an ESS of which an electric power supply state is estimated to be opposite to the same according to an example embodiment.

Referring to first electric power estimation data 501 according to an example of FIG. 5, it may be identified that the first ESS 510 may sufficiently provide for a household electric power consumption amount only with a power generation amount from 7:00 to 17:00, and that electric power is in a surplus in order for the first ESS 510 to be continuously charged, thereby causing an ESS electric power amount of the first ESS 510 to continuously increase from 7:00 to 17:00. Therefore, with respect to a unit time included in a daytime zone of the first ESS 510, an electric power supply state may be identified to be an electric power surplus. Unlike the same, when an example of second electric power estimation data 601 is identified in FIG. 5, it may be identified that electric power of an ESS is continuously close to 0, and a power generation amount is smaller than a household electric power consumption amount. In this case, an electric power supply state of the corresponding ESS may be identified to be an electric power shortage, in other words, to be an electric power supply state opposite to that of the first ESS 510.

After then, the electronic device 100 may, based on condition information of the first ESS 510, identify at least one second ESS 610 of at least one ESS which is estimated to have an electric power supply state opposite to that of the first ESS 510. Here, the condition information of the first ESS 510 may, according to an example embodiment, satisfy at least one of various conditions such as a sales price condition, a distance condition, a compatibility condition, a connection condition and the like.

According to an example embodiment, a sales price condition may signify a price which is to be applied when electric power of the first ESS 510 is sold or purchased, and which is set by an owner of the first ESS 510 through the first terminal 520 corresponding to the first ESS 510. For instance, the same may be a condition related to a minimal price for each unit or a minimal total price when the electric power of the first ESS 510 is sold, or a maximal price for each unit or a maximal total price when electric power to be stored in the first ESS 510 is purchased. Here, a sales prices condition like this may be set to vary for each time zone, or may be set to vary depending on a distance from an ESS which is a trading opponent. For instance, because it is predicted that an ESS which is closer may have higher efficiency during an electric power exchange, diversification of a condition such as applying a relatively high price for a purchase with respect to a close ESS, and applying a relatively low price for sales with respect thereto is also possible.

According to an example embodiment, a distance condition may signify a condition related to a maximal distance which is to be applied when the electric power of the first ESS 510 is sold or purchased, and which is set by an owner of the first ESS 510 through the first terminal 520 corresponding to the first ESS 510. As described above, because efficiency decreases during an electric power exchange as a distance increases, in consideration thereof, an owner of the first ESS 510 may set a condition as such through the first terminal 520.

According to an example embodiment, a compatibility condition may be a condition related to compatibility which is determined according to a basic feature of the first ESS 510 such as a type of the first ESS 510 or a connection method thereof with an electric grid. Further, a connection condition may be a condition as to whether being connected to an electric grid which is capable of an electric power exchange with the first ESS 510. Such compatibility condition and connection condition may be a condition determined by a basic feature of the first ESS 510 or an infrastructure-environmental feature thereof.

One portion of such conditions may not be applied depending on circumstances. According to an example embodiment, the electronic device 100 may not apply at least one portion of a condition included in the above-described condition information in a case in which a size of an absolute value of an electric power supply value, in other words, a sum of an electric power amount of the first ESS 510 and a power generation amount corresponding to the first ESS 510 and a value estimated by a difference by each unit time of a household electric power consumption amount is a threshold value or greater. For instance, the electronic device 100 may not apply a condition set by the first terminal 520 such as a sales price condition, a distance condition or the like with respect to a corresponding unit time in a case in which an electric power amount remaining as a surplus at the first ESS 510 is too great or the electric power amount is in a too great shortage thereat. As for this, because, in the case in which the electric power amount remaining as a surplus at the first ESS 510 is too great, selling electric power despite little unsuitable conditions may be profitable for an owner of the first ESS 510, and also in the case in which the electric power amount is in a too great shortage thereat, purchasing electric power despite little unsuitable conditions may be profitable for the owner of the first ESS 510, the electronic device 100 may identify the second ESS 610 without applying one portion of the conditions as such.

Further, as an example of a circumstance in which a condition set by the first terminal 520 such as a sales price condition, a distance condition or the like is not applied, a case in which an electric power supply state of the first ESS 510 corresponds to an electric power shortage in at least one portion corresponding to a peak time zone in a unit time may be provided. For instance, a daytime zone of a day with a heat wave forecast, a nighttime zone of a day with a cold wave forecast or the like may be set as a peak time zone, and, in a case in which an electric power supply state of the first ESS 510 corresponds to an electric power shortage at a unit time included in a peak time zone of the unit time, because it might be economic to purchase electric power from another ESS despite little unsuitable conditions rather than receiving and using electric power distributed from an external system, the electronic device 100 may identify the second ESS 610 without applying at least one portion of the conditions included in the condition information also in such a case.

Based on at least one portion of the conditions included in the above-described condition information, the electronic device 100 may identify at least one second ESS 610 to determine whether to perform an electric power exchange with the first ESS 510. For this, specifically, the electronic device 100 may deliver trading information related to an electric power exchange along with a notification for indicating that an electric power trading between the first terminal 520 corresponding to the first ESS 510 and the second terminal 620 corresponding to the second ESS 610 is possible to the same.

Specifically, the electronic device 100 may deliver trading information related to an electric power exchange along with a notification for indicating that an electric power trading between the first terminal 520 corresponding to the first ESS 510 and the second terminal 620 corresponding to the second ESS 610 is possible to the same. Here, the trading information may include various kinds of information which may assist in decision making and trading closure such as a time corresponding to a corresponding unit time, an electric power supply value of one's ESS, an electric power supply value of a trading opponent's ESS, which are estimated with respect to the corresponding unit time, information of a price for each unit and a total price and the like. In the description above, it is described based on an electric power trading between the first ESS 510 and the second ESS 610, and, according to an example embodiment, the electronic device 100 may provide information related to a plurality of candidate unit times which are capable of an electric power trading to the first terminal 520, and, when one of the same is selected, may deliver trading information related to a corresponding unit time.

After the trading information is delivered as such, when electric power trading intention information is identified from the first terminal 520 and the second terminal 620, the electronic device 100 may identify that a trading has been closed, and may determine to perform an electric power exchange between the first ESS 510 and the second ESS 610. If the electric power trading intention information is not identified, the electronic device 100 may identify that a trading is not closed, and may determine not to perform an electric power exchange between the first ESS 510 and the second ESS 610.

The electronic device 100 may, in a case of having determined to perform an electric power exchange between the first ESS 510 and the second ESS 610, control the first ESS 510 and the second ESS 610 in order for an electric power exchange to occur by an electric power amount which is agreed upon between the first ESS 510 and the second ESS 610, at an adequate point in time. Here, the adequate point in time may be determined in consideration of various circumstances. For instance, in a case in which electric power is required to be introduced from the second ESS 610 into the first ESS 510, if there is a space in a capacity of the second ESS 610 a long time before a point in time at which electric power is scarce at the first ESS 510, and if there is no space in a capacity of an electric grid between the first ESS 510 and the second ESS 610 at a point in time at which electric power is scarce at the first ESS 510 but there is a space therein at a point in time which is prior thereto, the electronic device 100 may control in order for electric power to be introduced from the second ESS 610 into the first ESS 510 prior to a point in time at which electric power is scarce at the first ESS 510. Alternatively, if there is a surplus in electric power at the second ESS 610 only immediately before a point in time at which electric power is scarce at the first ESS 510, the electronic device 100 may control in order for electric power to be introduced from the second ESS 610 into the first ESS 510 immediately before a point in time at which electric power is scarce at the first ESS 510. Like this, considering various kinds of circumstance information as to whether there is a space in a capacity of an ESS from and into which electric power is to be discharged and introduced or in an electric grid and the like, a point in time of an electric power exchange may be determined.

According to an example embodiment, electric power estimation data and electric power data at a corresponding point in time corresponding thereto may be actually different from each other. In this case, a closed trading may be cancelled. For example, in a case in which ESS electric power was estimated to remain by 10 kWh of electric power and was intended to be sold, but in reality, only 5 kWh of electric power remains, a trading may be automatically cancelled. Such a case may often occur when a weather forecast is incorrect. During seasons with a high probability that a weather forecast might be incorrect, the electronic device 100 may, when transmitting transaction information to a terminal corresponding to each ESS, provide information related thereto along therewith. For instance, the electronic device 100 may notify that there is a high probability that a weather forecast might be incorrect, and may also notify that a trading may be cancelled in a case in which electric power data become different due to an incorrect weather forecast.

When a trading is completed, the electronic device 100 may deliver a trading account to a distribution database. The distribution database may be connected to a blockchain through a P2P network, and, because the trading account is stored in such a distribution database, speediness, integrity and security of a trading may be guaranteed.

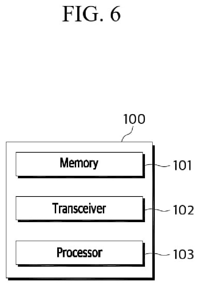

FIG. 6 illustrates a block diagram of the electronic device 100 according to an example embodiment.

According to an example embodiment, the electronic device 100 may include a memory 101 and a processor 103. With respect to the electronic device 100 which is illustrated in FIG. 6, only components associated with the present example embodiment are illustrated. Therefore, those of ordinary skill in the art associated with the present example embodiment may understand that other components in general use in addition to the components illustrated in FIG. 6 may be further included. In an example embodiment, the processor 103 may be included in a controller.

The processor 103 may control an overall operation of the electronic device 100 and process data and signals. The processor 103 may be constituted with at least one hardware unit. Further, the processor 103 may be configured to execute at least one instruction stored in the memory 101.

For instance, when at least one instruction is executed, the processor 103 is configured to identify a plurality of electric power estimation data during a first period which correspond to each of a plurality of ESSs, identify, based on first electric power estimation data during the first period which correspond to a first ESS of a plurality of ESSs, at least one second ESS matched with the first ESS, identify electric power trading intention information from each of a first terminal associated with the first ESS and a second terminal associated with the second ESS, and determine, based on the electric power trading intention information identified from the first terminal and the second terminal, whether to perform an electric power exchange between the first ESS and the second ESS.

Various operations described as being performed by the electronic device 100 in the present disclosure may be performed with, with respect to at least one instruction stored in the memory 101, the processor 103 being configured to perform the above-described various operations when the at least one instruction is executed.

According to an example embodiment, the electronic device 100 may additionally include a transceiver 102 for performing wired/wireless communication. The electronic device 100 may communicate with an external electronic device by using the transceiver 102. The external electronic device may be a terminal or a server. Further, a communication technology used by the transceiver 102 may include global system for mobile communication (GSM), code division multi-access (CDMA), long-term evolution (LTE), 5G, wireless LAN (WLAN), wireless-fidelity (Wi-Fi), Bluetooth^{™}, radio frequency identification (RFID), infrared data association (IrDA), ZigBee, near-field communication (NFC) and the like.

The electronic device according to the above-described example embodiments may include a processor, a memory for storing and executing program data, a permanent storage such as a disk drive, and/or a user interface device such as a communication port, a touch panel, a key and/or a button that communicates with an external device. Methods implemented as software modules or algorithms are computer-readable codes or program instructions executable on the processor, and may be stored on a computer-readable recording medium. Here, the computer-readable recording medium may include a magnetic storage medium (e.g., a read-only memory (ROM), a random-access memory (RAM), a floppy disk, a hard disk, or the like), an optical reading medium (e.g., a CD-ROM or a digital versatile disc (DVD)), or the like. The computer-readable recording medium may be dispersed to computer systems connected by a network in order for computer-readable codes to be stored and executed in a dispersed manner. The medium may be read by a computer, stored in the memory, and executed by the processor.

The present example embodiments may be represented by functional block configurations and various processing steps. These functional blocks may be implemented by various numbers of hardware and/or software configurations that execute specific functions. For example, the example embodiments may adopt integrated circuit configurations such as a memory, a processor, a logic circuit, and a look-up table that may execute various functions by control of one or more microprocessors or other control devices. Similar to that components may be executed by software programming or software elements, the present example embodiments may be implemented by programming or scripting languages such as C, C++, Java, and assembler language, including various algorithms implemented by combinations of data structures, processes, routines, or of other programming configurations. Functional aspects may be implemented by algorithms executed by one or more processors. In addition, the present example embodiments may adopt the related art for electronic environment setting, signal processing, and/or data processing. The terms "mechanism", "element", "means", and "configuration" may be widely used and are not limited to mechanical and physical configurations. The terms may include the meaning of a series of routines of software in association with a processor or the like.

The above-described example embodiments are merely examples, and other example embodiments may be implemented within the scope of the claims to be described later.

## Claims

1. An electronic device supporting an electric power trading, the electronic device comprising:
a transceiver;
a processor; and
a memory storing at least one instruction,
wherein, when the at least one instruction is executed, the processor is configured to:
identify a plurality of electric power estimation data during a first period which correspond to each of a plurality of energy storage systems (ESS); identify, based on first electric power estimation data during the first period which correspond to a first ESS of a plurality of ESSs, at least one second ESS matched with the first ESS;
identify electric power trading intention information from each of a first terminal associated with the first ESS and a second terminal associated with the second ESS; and
determine, based on the electric power trading intention information identified from the first terminal and the second terminal, whether to perform an electric power exchange between the first ESS and the second ESS.

2. The electronic device of claim 1, wherein, when the at least one instruction is executed, the processor is configured to:
control, in a case of having determined to perform the electric power exchange between the first ESS and the second ESS, the first ESS and the second ESS in order for an electric power exchange to occur by an electric power amount agreed upon between the first ESS and the second ESS.

3. The electronic device of claim 1, wherein, when the at least one instruction is executed, the processor is configured to:
obtain the first electric power estimation data during a first period which correspond to the first ESS and are outputted from an artificial intelligence engine after weather prediction data with respect to the first period of a region corresponding to a location of the first ESS, which are identified from a weather prediction server, are inputted in the artificial intelligence engine,
wherein the artificial intelligence engine is an artificial intelligence model which is constructed by learning a correlation between weather data during a second period of a region corresponding to a location of at least one portion of the plurality of ESSs and electric power data including at least one portion of a power generation amount, a charge amount, a discharge amount and a household electric power consumption amount corresponding to the second period with respect to the at least one portion of the plurality of ESSs.

4. The electronic device of claim 3, wherein the correlation comprises:
a first correlation related to a proportionality with respect to a sunshine amount of a sunlight generation amount which is at least one portion of the power generation amount and an inverse proportionality with respect to a temperature thereof;
a second correlation related to a proportionality with respect to wind speed of a wind power generation amount which is at least one portion of the power generation amount; and
a third correlation with respect to a U letter-shaped relationship with respect to a temperature of the household electric power consumption amount.

5. The electronic device of claim 3, wherein the weather prediction data comprise data with respect to at least one portion of a temperature, a sunshine amount and wind speed which are predicted with respect to the first period of the region.

6. The electronic device of claim 1, wherein, when the at least one instruction is executed, the processor is configured to:
identify, based on the first electric power estimation data, electric power supply data for each unit time which are estimated with respect to the first period of the first ESS, wherein the electric power supply data for each unit time comprise data obtained by estimating whether a household electric power consumption amount corresponding the first ESS may be supplied with an electric power amount of the first ESS and a power generation amount corresponding to the first ESS for the each unit time;
identify, based on the electric power supply data for each unit time, at least one ESS estimated to have an electric power supply state opposite to that of the first ESS in at least one portion of the unit time; and
identify, based on condition information of the first ESS, the at least one second ESS of the at least one ESS estimated to have an electric power supply state opposite to that of the first ESS.

7. The electronic device of claim 6, wherein, when the at least one instruction is executed, the processor is configured to:
identify, based on the first electric power estimation information, the electric power supply data for each unit time further comprising a sum of the electric power amount of the first ESS and the power generation amount corresponding to the first ESS and a value estimated by a difference by each unit time of the household electric power consumption amount.

8. The electronic device of claim 7, wherein, when the at least one instruction is executed, the processor is configured to:
identify the at least one second ESS satisfying at least one of a sales price condition, a distance condition, a compatibility condition and a connection condition of which at least one is included in the condition information of the first ESS of the at least one ESS estimated to have an electric power supply state opposite to that of the first ESS in the at least one portion of the unit time.

9. The electronic device of claim 8, wherein, when the at least one instruction is executed, the processor is configured to:
identify that a size of the sum of the electric power amount of the first ESS and the power generation amount corresponding to the first ESS and the value estimated by the difference by each unit time of the household electric power consumption amount in the at least one portion of the unit time is a threshold value or greater; and
identify, with respect to the at least one portion of the unit time during which the size of the value estimated by the difference is a threshold value or greater, the at least one second ESS without applying at least one portion of a condition included in the condition information.

10. The electronic device of claim 9, wherein, when the at least one instruction is executed, the processor is configured to:
identify that an electric power supply state of the first ESS corresponds to an electric power shortage in at least one portion corresponding to a peak time zone of the unit time; and
identify, with respect to the at least one portion corresponding to the peak time zone of the unit time in which the electric power supply state of the first ESS corresponds to an electric power shortage, the at least one second ESS without applying at least one portion of a condition included in the condition information.

11. The electronic device of claim 1, wherein, when the at least one instruction is executed, the processor is configured to:
deliver trading information related to the electric power exchange between the first ESS and the second ESS to each of the first terminal and the second terminal; and
identify the electric power trading intention information comprising information indicating whether an electric power trading is desired and an electric power amount which is desired to be traded from each of the first terminal and the second terminal.

12. A method for supporting an electric power trading of an electronic device, the method comprising:
identifying a plurality of electric power estimation data during a first period which correspond to each of a plurality of ESSs;
identifying at least one second ESS matched with a first ESS based on first electric power estimation data during the first period corresponding to the first ESS of a plurality of ESSs;
identifying electric power trading intention information from each of a first terminal associated with the first ESS and a second terminal associated with the second ESS; and
determining, based on the electric power trading intention information identified from the first terminal and the second terminal, whether to perform an electric power exchange between the first ESS and the second ESS.

13. A computer-readable non-transitory recording medium which records a program for executing a method for supporting an electric power trading on a computer, wherein the method for supporting the electric power trading comprises:
identifying a plurality of electric power estimation data during a first period which correspond to each of a plurality of ESSs;
identifying, based on first electric power estimation data during the first period which correspond to a first ESS of a plurality of ESSs, at least one second ESS matched with the first ESS;
identifying electric power trading intention information from each of a first terminal associated with the first ESS and a second terminal associated with the second ESS; and
determining, based on the electric power trading intention information identified from the first terminal and the second terminal, whether to perform an electric power exchange between the first ESS and the second ESS.
